# EUROPEAN PATENT APPLICATION

(11) **EP 4 851 467 A1**
(43) Date of publication of application: **09.12.2026**
(21) Application number: 25748164.8
(22) Date of filing: 27.01.2025
(51) Int. Cl.: F04D 19/04, F04D 27/00, F04D 29/058, F16C 32/04

(54) **VACUUM PUMP AND MAGNETIC BEARING DEVICE**

(30) Priority: 31.01.2024 JP 2024012436
(71) Applicant: Edwards Japan Limited, Yachiyo-shi, Chiba 276-8523 (JP)
(72) Inventor: FUKAMI, Hideo, Yachiyo-shi Chiba 276-8523 (JP)
(74) Representative: Openshaw & Co.
(86) International application number: PCT/JP2025/002493
(87) International publication number: WO 2025/164582

(57) **Abstract**

[Problem] Proposed are a vacuum pump and a magnetic bearing device that can detect an abnormal state even in a case in which a failure occurs simultaneously in an input circuit and an output circuit.

[Solution] A magnetic bearing device 110 included in a vacuum pump 100 includes opposing electromagnets 104 disposed with respect to a rotating body 103, a current supply means 201 for supplying a current to the opposing electromagnets 104, a measurement means 202 for measuring a displacement of the rotating body 103 with respect to the opposing electromagnets 104, and a control means 203 for controlling the current on the basis of the displacement measured by the measurement means 202, a bias current Ib is included in the current supplied to the opposing electromagnets 104, and the control means 203 determines that there is an abnormality in a case where the sum of the currents Is supplied to the opposing electromagnets 104 is smaller than a predetermined current value If.

## Description

The present invention relates to a vacuum pump and a magnetic bearing device.

In a vacuum pump such as a turbo molecular pump, a magnetic bearing device that magnetically levitates a rotating body and holds it in a non-contact manner is used. A magnetic bearing device is equipped with a sensor (a measurement means) that measures the displacement of a rotating body and an electromagnet that adjusts the position of the rotating body. The electromagnet is excited and controlled on the basis of the displacement measured by the measurement means, and thus, it is possible to magnetically levitate the rotating body at a predetermined position.

Such a magnetic bearing device has a function of detecting an abnormal state caused by a failure and notifying the abnormal state with sound or display when the failure occurs (for example, when a short circuit or disconnection occurs in an output circuit that supplies a current to the electromagnet) (for example, see PTL 1).

In general, there are three cases in which an abnormal state is detected: a case in which the displacement of the rotating body measured by the measurement means is excessive (hereinafter referred to as an "excessive displacement state"); a case in which a current value supplied to the electromagnet exceeds a predetermined value (hereinafter referred to as an "excessive command current state"); and a case in which a short circuit or the like occurs in the output circuit described above, an excessive current flows, and a protective means such as a fuse operates (hereinafter referred to as an "overcurrent fault state").

[PTL 1] Japanese Patent Application Publication No. 2002-295398

Incidentally, it is rare that a failure occurs in such a vacuum pump, and it is extremely rare that failures occur in a plurality of locations at the same time. However, for example, if a malfunction such as damage to a stator blade occurs during operation of the vacuum pump, there is a risk that a failure in which both an input circuit through which a position signal from the measurement means flows and the above-mentioned output circuit are simultaneously disconnected may occur. In this case, it was found that even if the device had a function of detecting the above three states, it was not possible to detect the abnormal state. For this reason, even if the frequency of occurrence is small, such a malfunction may lead to a major problem.

In view of the above, an object of the present invention is to provide a vacuum pump and a magnetic bearing device that can detect an abnormal state even in a case in which a failure occurs simultaneously in an input circuit through which a position signal from a measurement means flows and an output circuit that supplies a current to an electromagnet.

According to the present invention, there is provided a vacuum pump equipped with a magnetic bearing device that magnetically levitates a rotating body and holds it in a non-contact manner, wherein the magnetic bearing device includes opposing electromagnets disposed with respect to the rotating body, a current supply means for supplying a current to the opposing electromagnets, a measurement means for measuring a displacement of the rotating body with respect to the opposing electromagnets, and a control means for controlling the current on the basis of the displacement measured by the measurement means, wherein a bias current is included in the current supplied to the opposing electromagnets, and wherein the control means determines that there is an abnormality in a case where the sum of the currents supplied to the opposing electromagnets is smaller than a predetermined current value.

In such a vacuum pump, preferably, the predetermined current value is 50% of a current value of the bias current.

Preferably, in a case in which, in a predetermined time after a time when the sum of the currents becomes smaller than the predetermined current value, a cumulative time of a state in which the sum of the currents is smaller than the predetermined current value becomes longer than 50% of the predetermined time, the control means determines that there is an abnormality.

Further, preferably, in a case in which, starting from a time when the sum of the currents becomes smaller than the predetermined current value, a cumulative time of a state in which the sum of the currents is smaller than the predetermined current value becomes equal to or longer than a cumulative time of a state in which the sum of the currents is equal to or larger than the predetermined current value by a specified time, the control means determines that there is an abnormality.

Further, according to the present invention, there is provided a magnetic bearing device that magnetically levitates a rotating body and holds it in a non-contact manner, including: opposing electromagnets disposed with respect to the rotating body; a current supply means for supplying a current to the opposing electromagnets; a measurement means for measuring a displacement of the rotating body with respect to the opposing electromagnets; and a control means for controlling the current on the basis of the displacement measured by the measurement means, wherein a bias current is included in the current supplied to the opposing electromagnets, and wherein the control means determines that there is an abnormality in a case where the sum of the currents supplied to the opposing electromagnets is smaller than a predetermined current value.

Regarding electromagnets used to magnetically levitate a rotating body in a vacuum pump or a magnetic bearing device, the inventors of the present invention focused on opposing electromagnets disposed to oppose each other with respect to a rotating body, and further focused on a bias current included in a current supplied to the opposing electromagnets. Although the value of the current given to each of the opposing electromagnets changes in response to a displacement of the rotating body, in a case in which the bias current is included in the each current, even in a case in which various factors are taken into account, the sum of the currents supplied to the opposing electromagnets becomes larger than a predetermined current value regardless of the displacement of the rotating body measured by a measurement means. In other words, in a case in which the sum of the currents supplied to the opposing electromagnets is smaller than the predetermined current value, a control means determines that an abnormal state has occurred, and thus it is possible to detect an abnormal state even in a case in which a failure occurs simultaneously in an input circuit through which a position signal from the measurement means flows and an output circuit that supplies a current to the electromagnets.

[Fig. 1]

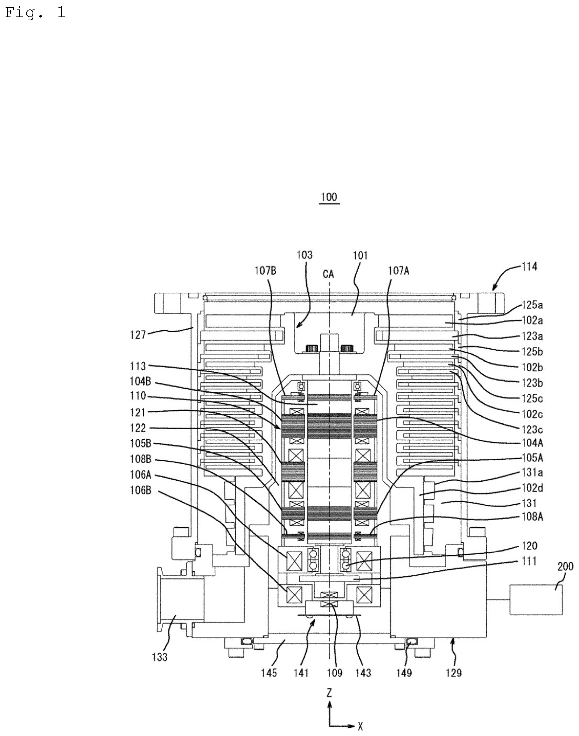

   Fig. 1 is a vertical cross-sectional view schematically showing one embodiment of a vacuum pump according to the present invention.
[Fig. 2]

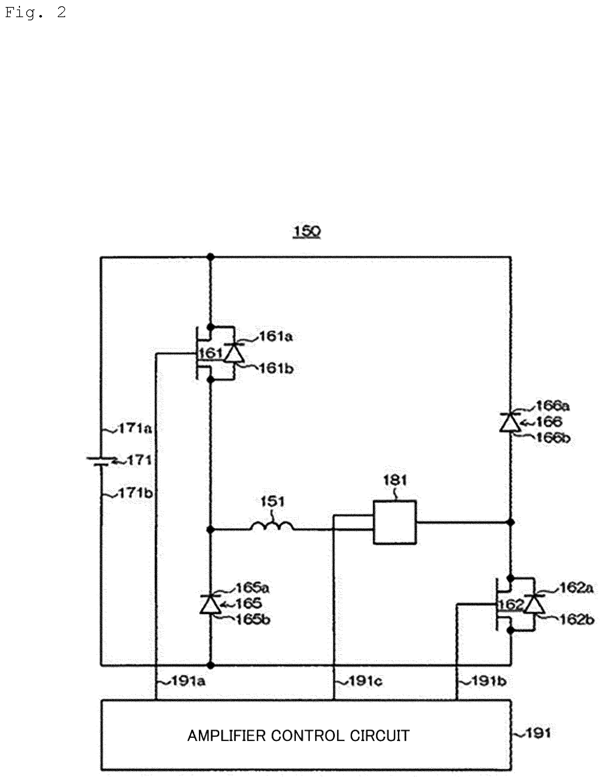

   Fig. 2 is a circuit diagram of an amplifier circuit of the vacuum pump shown in Fig. 1.
[Fig. 3]

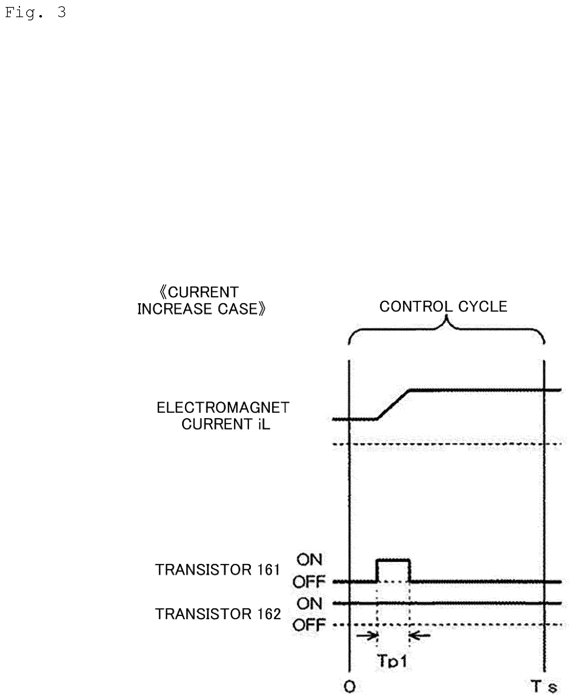

   Fig. 3 is a time chart showing control in a case in which a current command value is larger than a detected value.
[Fig. 4]

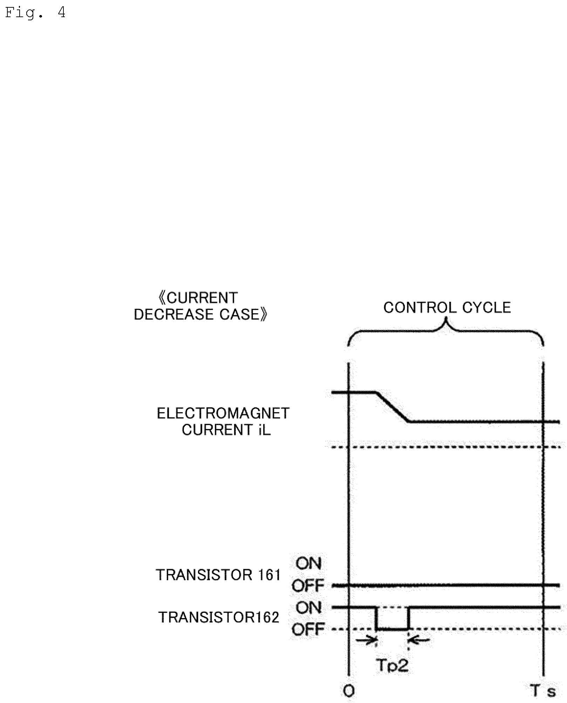

   Fig. 4 is a time chart showing control in a case in which the current command value is smaller than the detected value.
[Fig. 5]

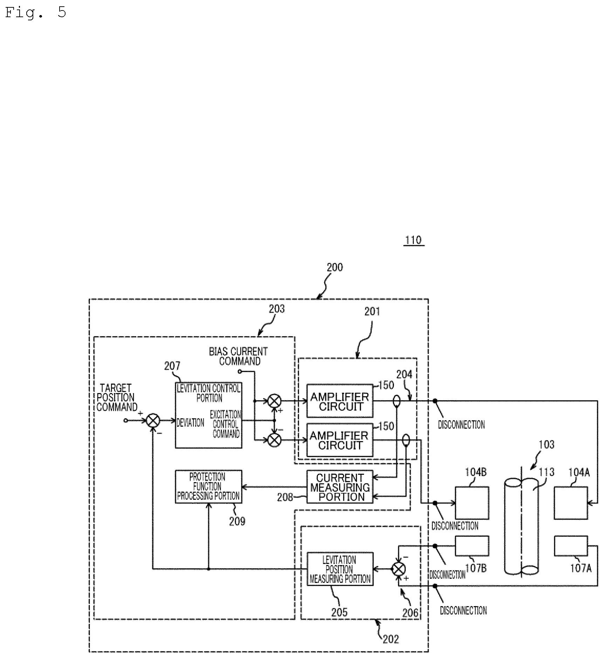

   Fig. 5 is a schematic diagram of a magnetic bearing device of the vacuum pump shown in Fig. 1.
[Fig. 6]

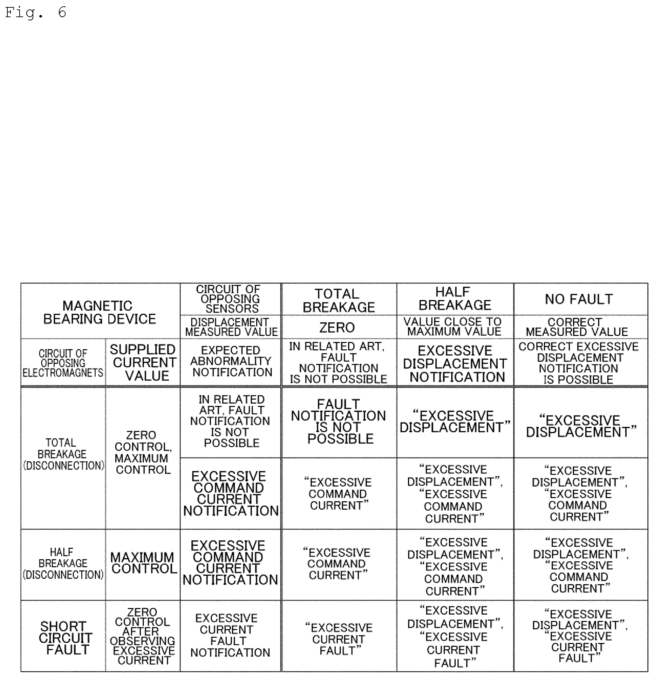

   Fig. 6 is a diagram summarizing an abnormal state in a case in which a failure occurs in an input circuit through which a position signal from a measurement means flows and an output circuit that supplies a current to an electromagnet.
[Fig. 7]

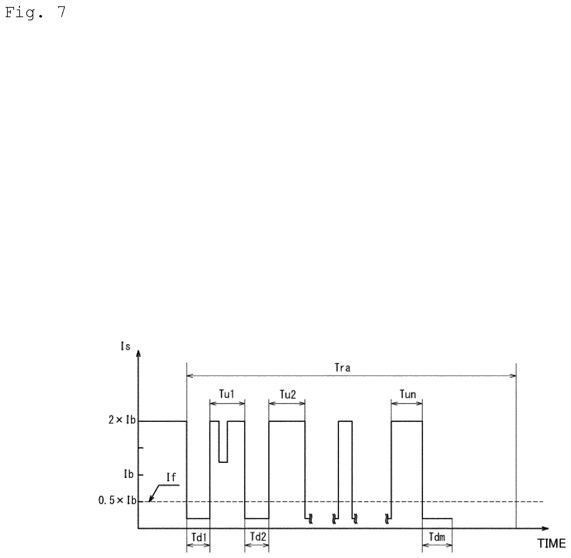

   Fig. 7 is a diagram showing a relationship between the sum of currents supplied to opposing electromagnets and time.
[Fig. 8]

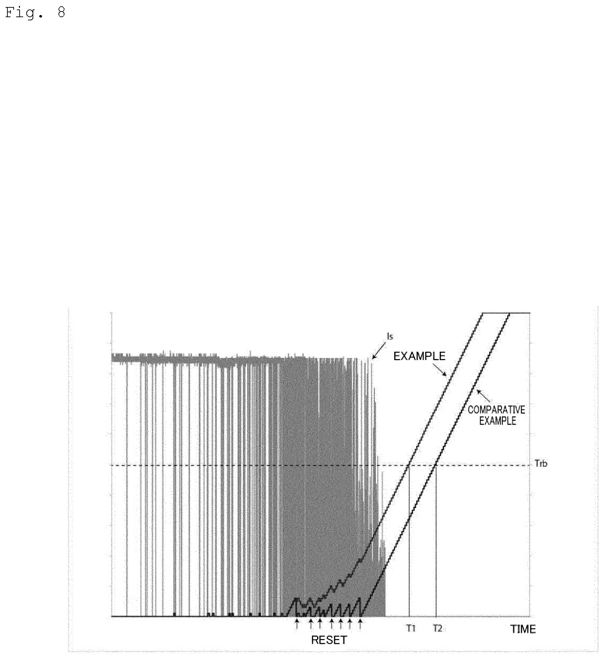

   Fig. 8 is a diagram showing a result of a difference between a general determination method of an abnormal state of the related art and a determination method of one embodiment according to the present invention.

A turbo molecular pump, which is an embodiment of a vacuum pump according to the present invention, will be described below with reference to the drawings.

A vertical cross-sectional view of this turbo molecular pump 100 is shown in Fig. 1. In Fig. 1, an X-axis direction is a left and right direction on the paper, a Z-axis direction is a vertical direction on the paper, and a Y-axis direction is a forward and backward direction from the paper. In the turbo molecular pump 100, an inlet port 101 is formed at the upper end of a cylindrical outer cylinder 127 extending along a central axis CA parallel to the Z-axis direction. A rotating body 103 in which a plurality of rotor blades 102 (102a, 102b, 102c, ...), which are turbine blades for sucking and exhausting a gas (an intake gas), are formed radially and in multiple stages around a circumference is provided inside the outer cylinder 127. A rotor shaft 113 is attached to the center of the rotating body 103, and in the present embodiment, the rotor shaft 113 is supported and position-controlled while being levitated in the air by a magnetic bearing device 110 with five-axis control. The rotating body 103 is generally made of a metal such as aluminum or an aluminum alloy. A detailed description of the magnetic bearing device 110 will be given below.

The magnetic bearing device 110 includes a total of four upper radial electromagnets 104, which are disposed on the outer side of the rotor shaft 113 in a radial direction, wherein two electromagnets oppose each other in the X-axis direction and two electromagnets oppose each other in the Y-axis direction. In Fig. 1, regarding the two upper radial electromagnets 104 opposing each other in the X-axis direction, the electromagnet located on a + side in the X-axis direction (a right side with respect to the central axis CA in Fig. 1) is shown as an upper radial electromagnet 104A, and the electromagnet located on a - side in the X-axis direction (a left side with respect to the central axis CA in Fig. 1) is shown as an upper radial electromagnet 104B.

A total of four upper radial sensors 107 are provided close to the upper radial electromagnets 104 to measure a displacement of the rotor shaft 113. As each of the upper radial sensors 107, for example, an inductance sensor having a conduction winding, an eddy current sensor, or the like is used. The upper radial sensors 107 of the present embodiment measure the displacement of the rotor shaft 113 in the X-axis direction and the Y-axis direction on the upper side of the rotor shaft 113, two upper radial sensors 107 are provided corresponding to the two upper radial electromagnets 104 opposing each other in the X-axis direction, and two upper radial sensors 107 are provided corresponding to the two upper radial electromagnets 104 opposing each other in the Y-axis direction. In Fig. 1, regarding the upper radial sensors 107 located in the X-axis direction, the sensor located on a + side in the X-axis direction (a right side with respect to the central axis CA in Fig. 1) is shown as an upper radial sensor 107A, and the sensor located on a - side in the X-axis direction (a left side with respect to the central axis CA in Fig. 1) is shown as an upper radial sensor 107B. Further, the upper radial sensors 107 of the present embodiment are so-called differential type sensors that measure the position in the X-axis direction and the Y-axis direction of the rotor shaft 113 in two directions, the + direction and the - direction, respectively, and are configured to send a position signal corresponding to the radial position of the rotor shaft 113 to the controller 200. Although the controller 200 in Fig. 1 is shown as being provided outside a base portion 129, it may be provided inside the base portion 129. A detailed description of the controller 200 will be given below.

Further, a total of four lower radial electromagnets 105 are provided on the lower side of the rotor shaft 113 on the outer side in the radial direction, two electromagnets of which oppose each other in the X-axis direction, and two electromagnets of which oppose each other in the Y-axis direction. In Fig. 1, regarding the two lower radial electromagnets 105 opposing each other in the X-axis direction, the electromagnet located on a + side in the X-axis direction (a right side with respect to the central axis CA in Fig. 1) is shown as a lower radial electromagnet 105A, and the electromagnet located on a - side in the X-axis direction (a left side with respect to the central axis CA in Fig. 1) is shown as a lower radial electromagnet 105B.

A total of four lower radial sensors 108 similar to the upper radial electromagnets 104 are provided close to the lower radial electromagnets 105. The lower radial sensors 108 measure the displacement of the rotor shaft 113 in the X-axis direction and the Y-axis direction on the lower side of the rotor shaft 113, two lower radial sensors 108 are provided corresponding to the two lower radial electromagnets 105 opposing each other in the X-axis direction, and two upper radial sensors 107 are provided corresponding to the two lower radial electromagnets 105 opposing each other in the Y-axis direction. In Fig. 1, regarding the lower radial sensors 108 located in the X-axis direction, the sensor located on a + side in the X-axis direction (a right side with respect to the central axis CA in Fig. 1) is shown as a lower radial sensor 108A, and the sensor located on a - side in the X-axis direction (a left side with respect to the central axis CA in Fig. 1) is shown as a lower radial sensor 108B. Similar to the upper radial sensors 107, the lower radial sensors 108 are also so-called differential type sensors that measure the position in the X-axis direction and the Y-axis direction of the rotor shaft 113 in two directions, the + direction and the - direction, respectively, and are configured to send the position signal corresponding to the radial position of the rotor shaft 113 to the controller 200.

In this controller 200, for example, a compensation circuit having a PID adjustment function generates an excitation control command signal for the upper radial electromagnets 104 on the basis of the signal of the position measured by the upper radial sensors 107 and generates an excitation control command signal for the lower radial electromagnets 105 on the basis of the position signal from the lower radial sensors 108. An amplifier circuit 150 shown in Fig. 2 (which will be described below) controls the excitation of the upper radial electromagnets 104 and lower radial electromagnets 105 on the basis of this excitation control command signal, and thus the upper radial position and the lower radial position of the rotor shaft 113 are adjusted.

The rotor shaft 113 is made of a high magnetic permeability material (iron, stainless steel, or the like) or the like, and is attracted by a magnetic force of the upper radial electromagnets 104 and by a magnetic force of the lower radial electromagnets 105. The attraction by the upper radial electromagnets 104 is performed independently in the X-axis direction and the Y-axis direction, and similarly the attraction by the lower radial electromagnets 105 is performed independently in the X-axis direction and the Y-axis direction.

Further, axial electromagnets 106 are disposed with a circular metal disk 111 provided below the rotor shaft 113 interposed vertically therebetween. In Fig. 1, the upper electromagnet is shown as an axial electromagnet 106A, and the lower electromagnet is shown as an axial electromagnet 106B. The metal disk 111 is made of a high magnetic permeability material such as iron.

An axial sensor 109 is provided below the rotor shaft 113 to measure the axial displacement of the rotor shaft 113. The axial sensor 109 is configured to detect the axial position of the rotor shaft 113 by detecting the position of a sensor target embedded in the lower end portion of the rotor shaft 113 and to send the position signal corresponding to this axial position to the controller 200.

Then, in the controller 200, for example, the compensation circuit having the PID adjustment function generates the excitation control command signals for the axial electromagnet 106A and the axial electromagnet 106B on the basis of the signal of the axial position detected by the axial sensor 109, and the amplifier circuit 150 controls the excitation of the axial electromagnet 106A and the axial electromagnet 106B on the basis of these excitation control command signals. Therefore, the axial electromagnet 106A attracts the metal disk 111 upward by a magnetic force and the axial electromagnet 106B attracts the metal disk 111 downward, and thus the axial position of the rotor shaft 113 is adjusted.

On the other hand, a motor 121 includes a plurality of magnetic poles disposed circumferentially to surround the rotor shaft 113. The magnetic poles are controlled by the controller 200 to rotationally drive the rotor shaft 113 through an electromagnetic force acting between the magnetic poles and the rotor shaft 113. Further, a rotational speed sensor (not shown) such as a Hall element, a resolver, an encoder, or the like is incorporated in the motor 121, and the rotational speed of the rotor shaft 113 is detected by a detection signal from the rotational speed sensor.

Furthermore, for example, a phase sensor (not shown) is attached near each of the lower radial sensors 108 to detect the rotational phase of the rotor shaft 113. The controller 200 detects the position of the magnetic pole using both the detection signals from the phase sensor and the rotational speed sensor.

A plurality of stator blades 123 (123a, 123b, 123c, ...) are arranged with a slight gap between them and the rotor blades 102 (102a, 102b, 102c, ...). The rotor blades 102 (102a, 102b, 102c, ...) are each formed to be inclined at a predetermined angle from a plane perpendicular to the axis of the rotor shaft 113 in order to transfer molecules of the intake gas downward by collision. The stator blades 123 (123a, 123b, 123c, ...) are made of a metal such as aluminum, iron, stainless steel, copper, or an alloy containing these metals as components.

Further, the stator blades 123 are similarly formed to be inclined at a predetermined angle from the plane perpendicular to the axis of the rotor shaft 113 and are arranged inward of the outer cylinder 127 in alternating stages with the stages of the rotor blades 102. The outer circumferential ends of the stator blades 123 are supported in a state of being inserted between a plurality of stacked stator blade spacers 125 (125a, 125b, 125c, ...).

Each of the stator blade spacers 125 is a ring-shaped member, is made of a metal such as aluminum, iron, stainless steel, copper, or an alloy containing these metals as components. The outer cylinder 127 is fixed to the outer circumferences of the stator blade spacers 125 with a slight gap therebetween. The base portion 129 is provided at the bottom of the outer cylinder 127. An outlet port 133 is formed in the base portion 129 and communicates with the outside. The intake gas that enters the inlet port 101 from a side of a chamber (a vacuum chamber) and is transferred to the base portion 129 is sent to the outlet port 133.

Furthermore, a threaded spacer 131 is provided between the lower the stator blade spacer 125 and the base portion 129. The threaded spacer 131 is a cylindrical member made of a metal such as aluminum, copper, stainless steel, iron, or an alloy containing these metals, and is provided with a plurality of spiral thread grooves 131a engraved in its inner circumferential surface. A spiral direction of the thread groove 131a is a direction in which the molecules of the intake gas are transferred toward the outlet port 133 when the molecules are transferred in a rotational direction of the rotating body 103. A cylindrical portion 102d is suspended from the lowest portion of the rotating body 103 following the rotor blades 102 (102a, 102b, 102c, ...). The outer circumferential surface of the cylindrical portion 102d is cylindrical, protrudes toward the inner circumferential surface of the threaded spacer 131, and is close to the inner circumferential surface of the threaded spacer 131 with a predetermined gap therebetween. The intake gas transferred to the thread groove 131a by the rotor blades 102 and the stator blades 123 is sent to the base portion 129 while being guided by the thread groove 131a.

The base portion 129 is a disk-shaped member that constitutes a base portion of the turbo molecular pump 100 and is generally made of a metal such as iron, aluminum, and stainless steel. The base portion 129 physically holds the turbo molecular pump 100 and also functions as a heat conduction path, and thus a metal with rigidity and high thermal conductivity such as iron, aluminum, or copper is desirably used.

In this configuration, when the rotor blades 102 are rotationally driven by the motor 121 together with the rotor shaft 113, the gas is sucked in from the chamber through the inlet port 101 due to the action of the rotor blades 102 and the stator blades 123. The rotation speed of each of the rotor blades 102 is normally 20,000 rpm to 90,000 rpm, and the circumferential speed at the tip end of the rotor blade 102 reaches 200 m/s to 400 m/s. The intake gas sucked through the inlet port 101 passes between the rotor blades 102 and the stator blades 123 and is transferred to the base portion 129. At this time, the temperature of the rotor blade 102 increases due to frictional heat generated when the intake gas comes into contact with the rotor blade 102, conduction of heat generated by the motor 121, or the like, but this heat is transmitted to a side of each of the stator blades 123 through radiation or conduction by the gas molecules of the intake gas or the like.

The stator blade spacers 125 are joined to each other at the outer circumferential portion and transmit the heat received by the stator blades 123 from the rotor blades 102, the frictional heat generated when the intake gas comes into contact with the stator blade 123, or the like to the outside.

The above description has been made assuming that the threaded spacer 131 is disposed on the outer circumference of the cylindrical portion 102d of the rotating body 103, and that the threaded spacer 131 is provided with the thread groove 131a engraved in its inner circumferential surface. However, on the contrary, a thread groove may be formed in the outer circumferential surface of the cylindrical portion 102d, and a spacer having a cylindrical inner circumferential surface may be disposed around the thread groove.

Depending on the use of the turbo molecular pump 100, an electrical equipment unit may be surrounded by a stator column 122 and the inside of the stator column 122 may be maintained at a predetermined pressure with a purge gas such that the intake gas sucked from the inlet port 101 does not enter the electrical equipment unit constituted by the upper radial electromagnets 104, the upper radial sensors 107, the motor 121, the lower radial electromagnets 105, the lower radial sensors 108, the axial electromagnets 106, the axial sensor 109, and the like.

In this case, a pipe (not shown) is provided in the base portion 129, and the purge gas is introduced through this pipe. The introduced purge gas is sent to the outlet port 133 through a gap between a protective bearing 120 and the rotor shaft 113, a gap between a rotor and a stator of the motor 121, and a gap between the stator column 122 and a cylindrical portion of the rotor blade 102 on the inner circumferential side.

Here, the turbo molecular pump 100 requires control based on specification of the model and unique parameters (for example, various characteristics corresponding to the model) that are individually adjusted. In order to store the control parameters, the turbo molecular pump 100 includes an electronic circuit unit 141 within its main body. The electronic circuit unit 141 is constituted by a semiconductor memory such as an EEP-ROM, electronic components such as semiconductor elements for accessing the semiconductor memory, a board 143 for mounting them, and the like. The electronic circuit unit 141 is housed in the base portion 129 constituting the lower portion of the turbo molecular pump 100, for example, under a rotational speed sensor (not shown) near the center of the base portion 129 and is closed by an airtight bottom cover 145.

Incidentally, in a manufacturing process of a semiconductor, some of process gases introduced into a chamber have a property of becoming solid when a pressure becomes higher than a predetermined value or a temperature becomes lower than a predetermined value. Inside the turbo molecular pump 100, the pressure of the intake gas is lowest at the inlet port 101 and highest at the outlet port 133. While the intake gas is being transferred from the inlet port 101 to the outlet port 133, if a pressure becomes higher than a predetermined value or a temperature becomes lower than a predetermined value, the intake gas becomes solid to be adhered and deposited inside the turbo molecular pump 100.

For example, in a case where SiCl4 is used as a process gas in an Al etching apparatus, at a low vacuum (760 [torr] to 10⁻2 [torr]) and a low temperature (about 20 [°C]), solid products (for example, AlCl3) are precipitated to be adhered and deposited inside the turbo molecular pump 100, as can be seen from a vapor pressure curve. As a result, when the precipitates of the process gas is deposited inside the turbo molecular pump 100, the deposits narrow a pump flow path and cause a decrease in the performance of the turbo molecular pump 100. The above-mentioned products were likely to be coagulated and adhered to a high pressure portion near the outlet port 133 or the threaded spacer 131.

For this reason, in order to solve this problem, in the related art, a heater (not shown) or an annular water cooling tube 149 is wound around the outer circumference of the base portion 129 or the like, and a temperature sensor (for example, a thermistor) (not shown) is embedded in the base portion 129. Then, heating of the heater and cooling by the water cooling tube 149 are controlled to maintain the temperature of the base portion 129 at a constant high temperature (a set temperature) on the basis of a signal from this temperature sensor (hereinafter referred to as TMS. TMS: temperature management system).

Next, regarding the turbo molecular pump 100 configured as described above, the amplifier circuit 150 that controls the excitation of the upper radial electromagnets 104, the lower radial electromagnets 105, and the axial electromagnets 106 will be described. A circuit diagram of this amplifier circuit 150 is shown in Fig. 2.

In Fig. 2, an electromagnet winding 151 constituting each of the upper radial electromagnets 104 or the like has one end connected to a positive electrode 171a of a power source 171 via a transistor 161 and the other end connected to a negative electrode 171b of the power source 171 via a current detection circuit 181 and a transistor 162. The transistors 161 and 162 are so-called power MOSFETs and have a structure in which a diode is connected between a source and a drain.

At this time, in the transistor 161, a cathode terminal 161a of the diode is connected to the positive electrode 171a, and an anode terminal 161b of the diode is connected to one end of the electromagnet winding 151. Further, in the transistor 162, a cathode terminal 162a of the diode is connected to the current detection circuit 181, and an anode terminal 162b of the diode is connected to the negative electrode 171b.

On the other hand, in a current regeneration diode 165, a cathode terminal 165a is connected to one end of the electromagnet winding 151, and an anode terminal 165b is connected to the negative electrode 171b. Further, similar to this, in a current regeneration diode 166, a cathode terminal 166a is connected to the positive electrode 171a, and an anode terminal 166b is connected to the other end of the electromagnet winding 151 via the current detection circuit 181. The current detection circuit 181 is constituted by, for example, a Hall sensor type current sensor or an electric resistance element.

The amplifier circuit 150 configured as described above corresponds to one electromagnet. The magnetic bearing device 110 of the present embodiment is 5-axis controlled and is provided with a total of 10 electromagnets 104, 105, and 106. A similar amplifier circuit 150 is configured for each of the electromagnets, and 10 amplifier circuits 150 are connected in parallel to the power source 171.

Further, an amplifier control circuit 191 is constituted by, for example, a digital signal processor unit (hereinafter referred to as a DSP unit) of the controller 200, and this amplifier control circuit 191 is configured to turn on/off the transistors 161 and 162.

The amplifier control circuit 191 compares a current value detected by the current detection circuit 181 (a signal reflecting this current value is referred to as a current detection signal 191c) and a predetermined current command value. On the basis of this comparison result, a magnitude of a pulse width (a pulse width time Tp1, Tp2) to be generated within a control cycle Ts, which is one cycle of PWM control, is determined. As a result, gate drive signals 191a and 191b having this pulse width are outputted from the amplifier control circuit 191 to gate terminals of the transistors 161 and 162.

It is necessary to control the position of the rotating body 103 at a high speed and with a strong force when the rotational speed of the rotating body 103 passes through a resonance point during an accelerated operation, or when a disturbance occurs during a constant speed operation. For this reason, in order to rapidly increase (or decrease) a current flowing through the electromagnet winding 151, a high voltage of about 50 V, for example, is used as the power source 171. Further, a capacitor (not shown) is usually connected between the positive electrode 171a and the negative electrode 171b of the power source 171 in order to stabilize the power source 171.

In this configuration, when both transistors 161 and 162 are turned on, the current flowing through the electromagnet winding 151 (hereinafter referred to as an electromagnet current iL) increases, and when both are turned off, the electromagnet current iL decreases.

Further, when one of the transistors 161 and 162 is turned on and the other thereof is turned off, a so-called flywheel current is maintained. By causing the flywheel current to flow through the amplifier circuit 150 in this manner, the hysteresis loss in the amplifier circuit 150 can be reduced, and the power consumption of the circuit as a whole can be kept low. Further, by controlling the transistors 161 and 162 in this manner, high frequency noise such as harmonics generated in the turbo molecular pump 100 can be reduced. Furthermore, by measuring this flywheel current with the current detection circuit 181, the electromagnet current iL flowing through the electromagnet winding 151 can be detected.

That is, in a case where the detected current value is smaller than the current command value, both transistors 161 and 162 are turned on for a time equivalent to the pulse width time Tp1 only once during the control cycle Ts (for example, 100 µs), as shown in Fig. 3. For this reason, the electromagnet current iL during this period increases toward a current value iLmax (not shown) that can flow from the positive electrode 171a to the negative electrode 171b via the transistors 161 and 162.

On the other hand, in a case where the detected current value is larger than the current command value, both transistors 161 and 162 are turned off for a time equivalent to the pulse width time Tp2 only once during the control cycle Ts as shown in Fig. 4. For this reason, the electromagnet current iL during this period decreases toward a current value iLmin (not shown) that can be regenerated from the negative electrode 171b to the positive electrode 171a via the diodes 165 and 166.

In either case, either one of the transistors 161 and 162 is turned on after the pulse width time Tp1 or Tp2 has elapsed. For this reason, during this period, the flywheel current is maintained in the amplifier circuit 150.

Next, the magnetic bearing device 110 and the controller 200 described above will be described in detail with reference to Fig. 5. In the following description, only the magnetic bearing device 110 and the controller 200 related to the upper radial electromagnets 104A and 104B opposing each other in the X-axis direction among the electromagnets (104, 105, and 106) described above will be described, but the configuration is also the same for the other electromagnets. For this reason, descriptions regarding the other electromagnets will be omitted below, and portions regarding the other electromagnets will also be omitted in Fig. 5.

As shown in Fig. 5, the controller 200 includes a current supply means 201, a measurement means 202, and a control means 203. The current supply means 201 includes the amplifier circuit 150 described above and an output circuit 204 that connects the upper radial electromagnet 104A or 104B and the amplifier circuit 150 to each other, the measurement means 202 includes a levitation position measuring portion 205 and an input circuit 206 that connects the upper radial sensor 107A or 107B and the levitation position measuring portion 205 to each other, and the control means 203 includes a levitation control portion 207 that sends an excitation control command signal to the current supply means 201, a current measuring portion 208 for measuring the current supplied to the upper radial electromagnet 104A or 104B, and a protection function processing portion 209. The output circuit 204 is provided with a protective means (such as a fuse) for cutting off a current in a case in which a short circuit occurs and an excessive current flows, for example. As shown in Fig. 5, the magnetic bearing device 110 is constituted by the upper radial electromagnets 104A and 104B, the upper radial sensors 107A and 107B, the current supply means 201, the measurement means 202, and the control means 203.

In the magnetic bearing device 110 configured as described above, when the rotor shaft 113 is being rotated by the motor 121, the levitation position measuring portion 205 of the measurement means 202 measures the displacement of the rotor shaft 113 using the upper radial sensors 107A and 107B. Specifically, when a distance between the upper radial sensor 107A and the rotor shaft 113 changes, an inductance of a coil included in the upper radial sensor 107A changes according to the distance, and thus an output voltage of the upper radial sensor 107A changes. Similarly, when a distance between the upper radial sensor 107B and the rotor shaft 113 changes, an inductance of a coil included in the upper radial sensor 107B changes according to the distance, and thus an output voltage of the upper radial sensor 107B changes. In order to avoid the influence of noise or the like, a difference between the output voltage of the upper radial sensor 107A and the output voltage of the upper radial sensor 107B is defined as the displacement of the rotor shaft 113, and a position signal corresponding to this displacement is fed back to the control means 203.

The levitation control portion 207 of the control means 203 calculates a deviation between an actual position and a target position of the rotor shaft 113 on the basis of the position signal fed back from the measurement means 202 and the signal regarding a target position command, and sends a signal regarding an excitation control command to the current supply means 201 on the basis of the deviation. Further, the control means 203 also sends a signal regarding a bias current command to the current supply means 201. On the basis of this signal, the current supply means 201 causes each amplifier circuit 150 to supply a current to which a bias current Ib is added to the upper radial electromagnet 104A and the upper radial electromagnet 104B. As a result, a magnetic attraction force from the upper radial electromagnet 104A and a magnetic attraction force from the upper radial electromagnet 104B act on the rotor shaft 113 to move the rotor shaft 113 to the target position.

Here, the operations of the control means 203 and the current supply means 201 will be specifically described. For example, in a case when the rotor shaft 113 is displaced such that the distance from the upper radial electromagnet 104A is greater than the distance from the upper radial electromagnet 104B, the control means 203 sends a signal to the current supply means 201 such that the amplifier circuit 150 connected to the upper radial electromagnet 104A outputs a current Ip (Ip = Ib + Ic), which is the sum of the bias current Ib described above and a current corresponding to this displacement (a control current Ic) and the amplifier circuit 150 connected to the upper radial electromagnet 104B outputs a current Im (Im = Ib - Ic), which is a difference between the bias current Ib and the control current Ic.

In addition, the control means 203 of the present embodiment includes the protection function processing portion 209 that has a function to determine that the magnetic bearing device 110 is in an abnormal state in a case in which the displacement of the rotor shaft 113 measured by the measurement means 202 is excessive (an excessive displacement state), in a case in which a current value supplied to the upper radial electromagnets 104A and 104B exceeds a predetermined value (an excessive command current state), and in a case in which an excessive current flows in the output circuit 204 and the protective means operates (an overcurrent fault state). In addition, the protection function processing portion 209 has a function of operating a notification means (not shown) (for example, a buzzer, a warning lamp, or the like which notifies that it is the abnormal state by sound or display) provided in the turbo molecular pump 100 or a function of cutting off the current to the motor 121 to stop the rotating body 103 in a case in which it is determined that the magnetic bearing device 110 is in an abnormal state.

Incidentally, the configuration in which the displacement of the rotor shaft 113 is measured and the current based on the displacement is output from the amplifier circuit 150, thereby causing the magnetic attraction force from the upper radial electromagnets 104A and 104B to act on the rotor shaft 113 to move the rotor shaft 113 to the target position and the function of detecting the three abnormal states, the excessive displacement state, the excessive command current state, and the overcurrent fault state described above are also provided in the magnetic bearing device of the related art. However, if a failure in which two circuits, the input circuit 206 through which the position signal from the measurement means 202 flows and the output circuit 204 which connects the upper radial electromagnet 104A or 104B and the amplifier circuit 150 to each other shown in Fig. 5 are simultaneously disconnected occurs, it may not be possible to detect this failure as an abnormal state with the function of detecting the three abnormal state described above. This point will be described with reference to Fig. 6.

In Fig. 6, a "circuit of the opposing electromagnets" in the left column indicates a state of the output circuit 204, "no fault" is a state in which no fault has occurred in the output circuit 204, a "short circuit fault" is a state in which an excessive current flows in the output circuit 204 and the protective means operates, a "half breakage (disconnection)" is a state in which either one of a path connecting the upper radial electromagnet 104A and the amplifier circuit 150 to each other and a path connecting the upper radial electromagnet 104B and the amplifier circuit 150 to each other in the output circuit 204 is disconnected, and a "total breakage (disconnection)" is a state in which both of the two paths are disconnected.

In Fig. 6, the "circuit of the opposing sensors" in the upper row indicates a state of the input circuit 206, "no fault" is a state in which no fault has occurred in the input circuit 206, a "half breakage" is a state in which either one of the output voltage from the upper radial sensor 107A and the output voltage from the upper radial sensor 107B cannot be obtained (for example, a state in which the upper radial sensor 107A has failed, or a path regarding the upper radial sensor 107A of the input circuit 206 is disconnected), and a "total breakage" is a state in which both the output voltage from the upper radial sensor 107A and the output voltage from the upper radial sensor 107B cannot be obtained.

As described above, the position signal fed back from the measurement means 202 to the control means 203 is based on the difference between the output voltage of the upper radial sensor 107A and the output voltage of the upper radial sensor 107B. Therefore, in a case in which the "circuit of the opposing sensors" is in a state of the "half breakage," the output voltage from the upper radial sensor 107A or the output voltage from the upper radial sensor 107B is zero, and thus the position signal from the measurement means 202 is a signal when the rotor shaft 113 is displaced to a state close to the maximum even if the rotor shaft 113 is actually hardly displaced with respect to the upper radial sensor 107A or the upper radial sensor 107B. Further, in a case where the "circuit of the opposing sensors" is in a state of the "total breakage," the output voltage of the upper radial sensor 107A and the output voltage of the upper radial sensor 107B are both zero. That is, the position signal from the measurement means 202 is the same as a signal in a state in which the distance from the upper radial sensor 107A to the rotor shaft 113 is equal to the distance from the upper radial sensor 107B to the rotor shaft 113.

In the magnetic bearing device 110 having such a function, as shown in Fig. 6, in a case in which the "circuit of the opposing electromagnets" is in a state of the "no fault" and the "circuit of the opposing sensors" is in a state of the "no fault," the control means 203 is in a state in which it is possible to correctly detect an abnormality, for example, it is possible to detect that it is the excessive displacement state when the displacement of the rotor shaft 113 measured by the measurement means 202 becomes excessive, and it is possible to detect that it is the excessive command current state when the current value supplied to the upper radial electromagnets 104A and 104B exceeds a predetermined value.

In a case in which the "circuit of the opposing electromagnets" is in a state of the "no fault" or the "half breakage (disconnection)," the control means 203 can detect that it is the excessive command current state when the current value supplied to the upper radial electromagnets 104A and 104B exceeds a predetermined value. In addition, in a case in which the "circuit of the opposing electromagnets" is in a state of the "no fault" or the "half breakage (disconnection)," if the "circuit of the opposing sensors" is in a state of the "no fault" or the "half breakage," it is possible to detect an abnormality as the excessive displacement state. In addition, in a case in which the "short circuit fault" occurs in the "circuit of the opposing electromagnets," the control means 203 can detect that it is the overcurrent fault state regardless of the state of the "circuit of the opposing sensors."

In a case in which the "circuit of the opposing electromagnets" is in a state of the "total breakage (disconnection)," if the "circuit of the opposing sensors" is in a state of the "no fault" or the "half breakage," the control means 203 can detect an abnormality as the excessive displacement state. In addition, in a case in which the current value supplied to the upper radial electromagnets 104A and 104B exceeds a predetermined value, even in a case in which the "circuit of the opposing electromagnets" is in a state of the "total breakage (disconnection)" or the "circuit of the opposing sensors" is in a state of the "total breakage," it is possible to detect that it is the excessive command current state. However, in a case in which the "circuit of the opposing sensors" is in a state of the "total breakage," even if the rotor shaft 113 is largely displaced with respect to the upper radial sensor 107A or the upper radial sensor 107B, the position signal from the measurement means 202 is the same as a signal in a state in which the distance from the upper radial sensor 107A to the rotor shaft 113 is equal to the distance from the upper radial sensor 107B to the rotor shaft 113. Accordingly, the upper radial electromagnets 104A and 104B are basically not excited, and therefore, the current value supplied to the upper radial electromagnets 104A and 104B basically does not exceed a predetermined value. Furthermore, if the "circuit of the opposing electromagnets" is also in a state of the "total breakage (disconnection)," no excessive current will flow in the output circuit 204. For this reason, in the magnetic bearing device of the related art, when the "circuit of the opposing electromagnets" is in a state of the "total breakage (disconnection)" and the "circuit of the opposing sensor" is in a state of the "total breakage," the above three abnormal states cannot be detected (a state in which fault notification is not possible as shown in Fig. 6), and for example, there is a risk that the rotating body 103 may continue to rotate for a long time without being magnetically levitated.

On the other hand, the control means 203 of the present embodiment measures the sum of the currents supplied to the opposing upper radial electromagnet 104A and the upper radial electromagnet 104B using the current measuring portion 208 and has a function to determine that there is an abnormality in a case in which the sum of the currents is smaller than a predetermined current value If. That is, the sum of the currents Is of the upper radial electromagnet 104A and the upper radial electromagnet 104B measured by the current measuring portion 208 is usually the sum of the current Ip (Ip = Ib + Ic) output from the amplifier circuit 150 connected to the upper radial electromagnet 104A and the current Im (Im =Ib - Ic) output from the amplifier circuit 150 connected to the upper radial electromagnet 104B, which is approximately twice the bias current Ib (Is = Ip + Im = 2 × Ib)). However, in a case in which a disconnection or the like occurs in the output circuit 204 and a current is not supplied to both the upper radial electromagnet 104A and the upper radial electromagnet 104B that oppose each other, even if an influence of a variation in the parts constituting the turbo molecular pump 100, a variation in assembly, time delay in feedback control, or the like is taken into account, the sum of the currents Is measured by the current measuring portion 208 is smaller than a value approximately twice the bias current Ib. Therefore, in a case in which the predetermined current value If is set to a value smaller than a value approximately twice the bias current Ib and the sum of the currents Is of the opposing upper radial electromagnets 104A and 104B is smaller than the predetermined current value If, the protection function processing portion 209 determines that there is an abnormality, and thus even in a case in which the "circuit of the opposing electromagnets" is in a state of the "total breakage (disconnection)" and the "circuit of the opposing sensors" is in a state of the "total breakage," it is possible to stop the rotating body 103.

When the predetermined current value If is set to a value close to a value approximately twice the bias current Ib, there is a risk that depending on the usage state of the turbo molecular pump 100, it may be determined that the turbo molecular pump 100 is in an abnormal state even though it is normal. For example, the turbo molecular pump 100 is not necessarily installed in a posture shown in Fig. 1 (a posture in which the rotor shaft 113 is oriented in the vertical direction), and, for example, in a case in which the turbo molecular pump 100 is installed in a posture in which the rotor shaft 113 is oriented in the horizontal direction, it is necessary to generate a magnetic attraction force taking into account the gravity acting on the rotating body 103, and the sum of the currents Is of the upper radial electromagnets 104A and 104B may change depending on the installation posture. In consideration of these points, the inventor of the present application repeatedly investigated using various turbo molecular pumps 100 while assuming various usage conditions and found that in a case in which the predetermined current value If was set to 50% of the current value of the bias current Ib, it was possible to stably determine whether or not it is an abnormal state. For this reason, the predetermined current value If is preferably set to 50% of the current value of the bias current Ib.

Furthermore, the sum of the currents Is of the opposing upper radial electromagnets 104A and 104B may fluctuate as shown in Fig. 7, for example, due to the influence of the state of the failure in the output circuit 204, chattering of the observed current, noise from the surroundings, or the like. In consideration of the influence of such fluctuations, a method in which it is possible to more stably determine whether or not there was an abnormal state has been repeatedly investigated and it was found that it was effective to configure such that the control means 203 determines that there is an abnormality in a case in which, in a predetermined time Tra after the time when the sum of the currents Is becomes smaller than the predetermined current value If (in Fig. 7, 50% of the current value of the bias current Ib), a cumulative time (in Fig. 7, Td1 + Td2 + ... Tdm) of a state in which the sum of the currents Is is smaller than the predetermined current value If becomes longer than 50% of the predetermined time Tra (that is, in a case in which a conditional expression (Td1 + Td2 + ... Tdm) > Tra × 50% is satisfied).

In addition, in order to more stably determine whether or not it is an abnormal state, it was also effective to configure such that the control means 203 determines that there is an abnormality in a case in which, starting from the time when the sum of the currents Is becomes smaller than the predetermined current value If, a cumulative time (in Fig. 7, Td1 + Td2 + ... Tdm) of a state in which the sum of the currents Is is smaller than the predetermined current value If becomes equal to or longer than a cumulative time (in Fig. 7, Tu1 + Tu2 + ... Tun) of a state in which the sum of the currents Is is equal to or larger than the predetermined current value If by a specified time Trb (for example, the specified time Trb is 1 second) (that is, in a case in which a conditional expression (Td1 + Td2 + ... Tdm) - (Tu1 + Tu2 + ... Tun) ≥ Trb is satisfied).

Here, a difference between a general determination method of an abnormal state of the related art and the determination method described above will be explained with reference to Fig. 8. The sum of the currents Is shown in Fig. 8, with the horizontal axis representing a time and the vertical axis representing a current value, indicates a situation where the current value gradually decreases as time passes and eventually the current does not flow. The fine changes in the sum of the currents Is shown in Fig. 8 are mainly due to the influence of noise and the like. Furthermore, a comparative example shows a result of the general determination method of an abnormal state. In the general determination method of an abnormal state of the related art, it is determined that there is an abnormality when the state in which the sum of the currents Is is smaller than the predetermined current value If continues for the specified time Trb, and in a case in which the continuing time does not reach the specified time Trb, a reset is performed, and time measurement is started from the state in which the sum of the currents Is is smaller than the predetermined current value If again. In the comparative example shown in Fig. 8, the horizontal axis represents a time, and the vertical axis represents a duration time (a time during which a state in which the sum of the currents Is is smaller than the predetermined current value If continues). When the sum of the currents Is shown in Fig. 8 is checked using the determination method of the related art, a reset is performed several times in a case where the continuing time does not reach the specified time Trb, and an abnormality is detected at the stage of a time T2. On the other hand, an example shown in Fig. 8 shows a result using a method in which it is determined that there is an abnormality in a case in which the cumulative time of a state in which the sum of the currents Is is smaller than the predetermined current value If becomes equal to or longer than the cumulative time of a state in which the sum of the currents Is is equal to or larger than the predetermined current value If by the specified time Trb. In the example, the horizontal axis represents the time, and the vertical axis represents the duration time (the cumulative time of a state in which the sum of the currents Is is smaller than the predetermined current value If - the cumulative time of a state in which the sum of currents Is is equal to or larger than the predetermined current value If). When the sum of the currents Is shown in Fig. 8 is checked using the determination method of the present embodiment, a reset is not performed unlike the determination method of the related art, and therefore, an abnormality can be detected at a time T1, which is earlier than the time T2.

Although one embodiment of the present invention has been described above, the present invention is not limited to such specific embodiment, and unless specifically limited by the above description, various modifications, changes, and combinations are possible within the range of the gist of the present invention described in the claims. Furthermore, the effects of the embodiment described above are merely illustrative of the effects resulting from the present invention and do not mean that the effects of the present invention are limited to the above effects.

For example, the functions described with reference to Figs. 5 to 7 can also be applied to other electromagnets 104, 105, and 106 and other sensors 107, 108, and 109 without limited to the upper radial electromagnets 104A and 104B and the upper radial sensors 107A and 107B.

- 100: Turbo molecular pump (vacuum pump)
- 103: Rotating body
- 104: Upper radial electromagnet
- 105: Lower radial electromagnet
- 106: Axial electromagnet
- 107: Upper radial sensor
- 108: Lower radial sensor
- 109: Axial sensor
- 110: Magnetic bearing device
- 201: Current supply means
- 202: Measurement means
- 203: Control means

## Claims

1. A vacuum pump equipped with a magnetic bearing device that magnetically levitates a rotating body and holds it in a non-contact manner,
wherein the magnetic bearing device includes
opposing electromagnets disposed with respect to the rotating body,
a current supply means for supplying a current to the opposing electromagnets,
a measurement means for measuring a displacement of the rotating body with respect to the opposing electromagnets, and
a control means for controlling the current on the basis of the displacement measured by the measurement means,
wherein a bias current is included in the current supplied to the opposing electromagnets, and
wherein the control means determines that there is an abnormality in a case where the sum of the currents supplied to the opposing electromagnets is smaller than a predetermined current value.

2. The vacuum pump according to claim 1, wherein the predetermined current value is 50% of a current value of the bias current.

3. The vacuum pump according to claim 1 or 2, wherein, in a case in which, in a predetermined time after a time when the sum of the currents becomes smaller than the predetermined current value, a cumulative time of a state in which the sum of the currents is smaller than the predetermined current value becomes longer than 50% of the predetermined time, the control means determines that there is an abnormality.

4. The vacuum pump according to claim 1 or 2, wherein, in a case in which, starting from a time when the sum of the currents becomes smaller than the predetermined current value, a cumulative time of a state in which the sum of the currents is smaller than the predetermined current value becomes equal to or longer than a cumulative time of a state in which the sum of the currents is equal to or larger than the predetermined current value by a specified time, the control means determines that there is an abnormality.

5. A magnetic bearing device that magnetically levitates a rotating body and holds it in a non-contact manner, comprising:
opposing electromagnets disposed with respect to the rotating body;
a current supply means for supplying a current to the opposing electromagnets;
a measurement means for measuring a displacement of the rotating body with respect to the opposing electromagnets; and
a control means for controlling the current on the basis of the displacement measured by the measurement means,
wherein a bias current is included in the current supplied to the opposing electromagnets, and
wherein the control means determines that there is an abnormality in a case where the sum of the currents supplied to the opposing electromagnets is smaller than a predetermined current value.
